# NEUE EUROPÄISCHE PATENTSCHRIFT

(11) **EP 0 765 995 B2**
(45) Veröffentlichungstag und Bekanntmachung des Hinweises auf die Entscheidung über den Einspruch: **19.09.2001**
(45) Hinweis auf die Patenterteilung: 20.08.1997
(21) Anmeldenummer: 95110392.8
(22) Anmeldetag: 04.07.1995
(51) Int. Cl.: F01N 7/18, F01N 3/34

(54) **Vorrichtung zur Ankopplung von Abgasrohren an einen Motorblock**
Arrangement for connecting exhaust pipes to an engine block
Dispositif de connection de gaz d'échappement à un bloc moteur

(43) Veröffentlichungstag der Anmeldung: 02.04.1997
(73) Patentinhaber: BENTELER AG, D-33104 Paderborn (DE)
(72) Erfinder: Humburg, Erhardt, 34414 Menne - Warburg (DE); Kleinschmidt, Jürgen, 37688 Beverungen (DE)
(74) Vertreter: Bockermann, Rolf, Dipl.-Ing.

(56) Entgegenhaltungen:
- EP-A- 0 643 202
- EP-A- 0 709 557
- DE-A- 3 005 813
- DE-A- 4 214 796
- DE-A- 4 313 091
- DE-A- 4 315 086
- DE-C- 4 221 913
- DE-U- 8 914 153
- FR-A- 2 292 920

## Beschreibung

Die Erfindung betrifft eine Vorrichtung zur Ankopplung von Abgasrohren an einen Motorblock.

Zur Erhöhung der Leistung eines Verbrennungsmotors ist es bekannt, einen Teil der in den Abgasrohren strömenden heißen Abgase abzuzweigen und in die Abgaskanäle zu überführen. Zu diesem Zweck hat man neben dem Motorblock liegende, relativ aufwendige Rohrsysteme vorgesehen. Diese erfordern jedoch hohe Material- und Fertigungskosten sowie das Biegen und Verschweißen der Rohre untereinander und an den jeweiligen Flanschanschluss. Außerdem nehmen diese Rohrsysteme einen nicht unerheblichen Platz im Motorraum ein.

Um diese Eigenschaften zu vermeiden, sind zur Ankopplung der Abgasrohre an den Motorblock lamellenartig aufgebaute Flanschplatten vorgeschlagen worden, wie z.B. in der DE-U-89 14 153.9. Die die Abgaslöcher miteinander koppelnden Gasverbindungen werden hierbei durch gefräste oder gestanzte Kanäle in den innenliegenden Blechlagen der Flanschplatten hergestellt. Prägnant an einer solchen Bauart ist aber der hohe Aufwand für das Fügen der einzelnen Blechlagen. Da das Fügen normalerweise durch Schweißen erfolgt, sind zusätzliche Fräs- und Schleifarbeiten zur Erzielung der Ebenheit der Seitenfläche der Flanschplatte, die an den Motorblock geschraubt wird, erforderlich, um die notwendige Gasdichtheit an der Anschraubfläche zu gewährleisten.

Der Erfindung liegt ausgehend vom Stand der Technik die Aufgabe zugrunde, eine Vorrichtung zur Ankopplung von Abgasrohren an einen Motorblock zu schaffen, die einfacher und wirtschaftlicher herstellbar ist sowie problemloser mit einem Motorblock verbunden werden kann.

Die Lösung dieser Aufgabe besteht nach der Erfindung in einer ersten Variante in den Merkmalen des Anspruchs 1.

Ein wesentlicher Gesichtspunkt der Erfindung ist die Einstückigkeit der mit dem Motorblock zu verschraubenden Flanschplatte. Hierdurch entfallen die bei einer Lamellenkonstruktion notwendigen Fügeoperationen und die hiermit zwangsweise verbundenen Fräs- und Schleifarbeiten. Aufgrund der Einstückigkeit kann nun die Gasverbindung zwischen mindestens zwei die Flanschplatte auf ihrer gesamten Dicke durchsetzenden Abgaslöchern als muldenartige Vertiefung in der motorblockseitigen Seitenfläche ausgebildet werden. Die Dichtheit der Gasmulde wird dann durch die satte Anlage der Seitenfläche der Flanschplatte an der Gegenfläche des Motorblocks gewährleistet. Das heißt, der Querschnitt der Gasmulde für die Sekundärluft wird sowohl von der Flanschplatte als auch vom Motorblock begrenzt. Wieviel Gasmulden in der Flanschplatte vorgesehen werden, hängt von der Anzahl der Zylinder und der Art und Weise ab, wie die den Zylindern zugeordneten Abgaslöcher untereinander gekoppelt werden sollen.

Jede Gasmulde ist über nur einen die Flanschplatte durchsetzenden Querkanal mit einem Anschluss für die Sekundärluftleitung verbunden. Auf diese Weise werden die noch notwendigen Rohrleitungen zu den Abgasrohren und die zum Anschluss der Rohrleitungen an die Abgasrohre und an die Flanschplatte erforderlichen Arbeiten erheblich reduziert.

Die Gasmulde und die ebene motorblockseitige Seitenfläche sind durch eine spanlose Verpressung des Ausgangsmaterials der Flanschplatte erzeugt. In diesem Fall wird die Flanschplatte aus einer Blechplatine hergestellt, bevorzugt ausgestanzt. Insbesondere in einem vorgeschalteten Pressschritt wird die Gasmulde in die motorseitige Seitenfläche eingedrückt, welche dann die in einem nachgeschalteten Stanzvorgang ausgeschnittenen Abgaslöcher und den Querkanal verbindet. Gleichzeitig wird durch die spanlose Verpressung eine einwandfreie ebene motorblockseitige Seitenfläche erzeugt, die ohne jede zusätzliche Bearbeitung dicht an den Motorblock geschraubt werden kann. Die Tiefe der Gasmulde liegt innerhalb der Gesamtdicke der Flanschplatte. Das durch das Erzeugen der Gasmulde verdrückte Material steht als konvexe Wölbung auf der dem Motorblock abgewandten Seite der Flanschplatte vor.

Eine zweite Lösung der der Erfindung zugrundeliegenden Aufgabe besteht in der Variante gemäß den Merkmalen des Anspruchs 2. Hierbei werden die Flanschplatte und damit die Gasmulde sowie die ebene motorblockseitige Seitenfläche durch spanlose Umformung einer dünnwandigen Stahlblechplatine hergestellt. Ansonsten gelten auch hier die Vorteile des Anspruchs 1.

Um in diesem Zusammenhang bei einer erheblichen Materialreduzierung dennoch eine einwandfrei versteifte Flanschplatte zu gewährleisten, ist entsprechend den Merkmalen des Anspruchs 3 vorgesehen, dass durch rechtwinkliges Umstellen des Materials aus der Ebene der Stahlblechplatine ein umfangsseitiger Rand der Flanschplatte sowie die die Abgaslöcher und den Querkanal begrenzenden Wände gebildet sind.

Einen besonders einfach gestalteten Anschluss zur Kopplung einer Sekundärluftleitung mit der Gasmulde wird in den Merkmalen des Anspruchs 4 erblickt. Ein solcher mit einem Außengewinde versehener Nippel kann durch Press- oder Widerstandsschweißung problemlos dicht an die Mündung des Querkanals gesetzt werden.

Die Erfindung ist nachfolgend anhand von in den Zeichnungen dargestellten Ausführungsbeispielen näher erläutert. Es zeigen:
- Figur 1: in der Frontalansicht eine Flanschplatte;
- Figur 2: einen vertikalen Querschnitt durch die Flanschplatte der Figur 1 entlang der Linie II-II;
- Figur 3: in der Frontalansicht eine Flanschplatte gemäß einer weiteren Ausführungsform und
- Figur 4: einen vertikalen Querschnitt durch die Darstellung der Figur 3 entlang der Linie IV-IV.

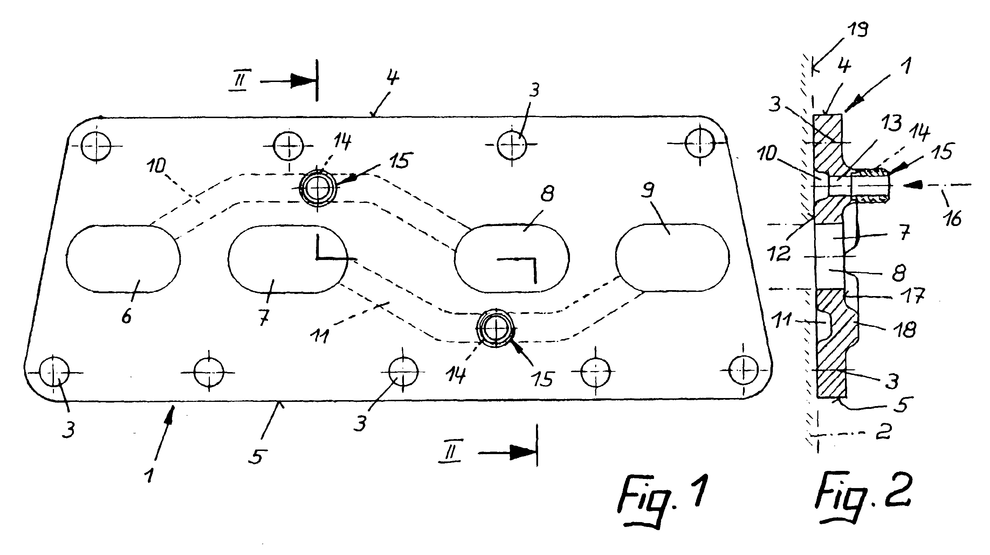

Mit 1 ist in den Figuren 1 und 2 eine einstückige Flanschplatte aus Stahl bezeichnet, die der Ankopplung von nicht näher dargestellten Abgasrohren eines Verbrennungsmotors an einen in strichpunktierter Linienführung nur schematisch angedeuteten Motorblock 2 dient.

Die gemäß Figur 1 etwa trapezartig konfigurierte Flanschplatte 1 weist insgesamt neun verteilt angeordnete Querbohrungen 3 auf, über welche die Flanschplatte 1 an den Motorblock 2 geschraubt wird. Die Querbohrungen 3 erstrecken sich entlang der Längsseiten 4, 5 der Flanschplatte 1.

Im Bereich der Mittellängsebene der Flanschplatte 1 sind insgesamt vier Abgaslöcher 6-9 mit ovaler Konfiguration vorgesehen. Die Abgaslöcher 6-9 erstrecken sich parallel zu den Längsseiten 4, 5 über die gesamte Dicke der Flanschplatte 1.

Die Abgaslöcher 6 und 8 einerseits sowie die Abgaslöcher 7 und 9 andererseits sind durch einen trapezförmigen Verlauf aufweisende Mulden 10, 11 in der dem Motorblock 2 zugewandten Seitenfläche 12 der Flanschplatte 1 miteinander gasleitend verbunden. Der Querschnitt dieser Mulden 10, 11 ist trapezförmig mit abgerundeten Ecken.

Etwa im mittleren Längenbereich der Mulden 10, 11 sind diese über Querkanäle 13 mit ein Außengewinde 14 aufweisenden Nippeln 15 verbunden, welche dem Anschluss von nur schematisch angedeuteten Sekundärluftleitungen 16 dienen, die andererseits in nicht näher veranschaulichter Weise an die Abgasrohre angeschlossen sind. Die Nippel 15 sind durch Widerstandsschweißung im Mündungsbereich der Querkanäle 13 angesetzt.

Die Flanschplatte 1 ist aus einer Blechplatine gestanzt. Anschließend werden in einem Pressschritt die Mulden 10, 11 eingebracht, wobei sich das verdrängte Material über die dem Motorblock 2 abgewandte andere Seitenfläche 17 entsprechend vorwölbt. Diese Wölbungen sind in der Figur 2 mit 18 bezeichnet.

Auch die dem Motorblock 2 zugewandte Seitenfläche 12 der Flanschplatte 1 ist bei diesem Pressvorgang exakt eben gepresst, so dass eine gasdichte Verschraubung der Flanschplatte 1 über die Seitenfläche 12 mit einer Gegenfläche 19 am Motorblock 2 gewährleistet ist.

Nach dem Pressschritt werden die Querbohrungen 3, die Abgaslöcher 6-9 sowie die Querkanäle 13 ausgestanzt und anschließend die Nippel 15 angeschweißt.

Es ist insbesondere anhand der Figur 2 zu sehen, dass die Tiefe der nutenartigen Mulden 10, 11 etwa der halben Dicke der Flanschplatte 1 entspricht.

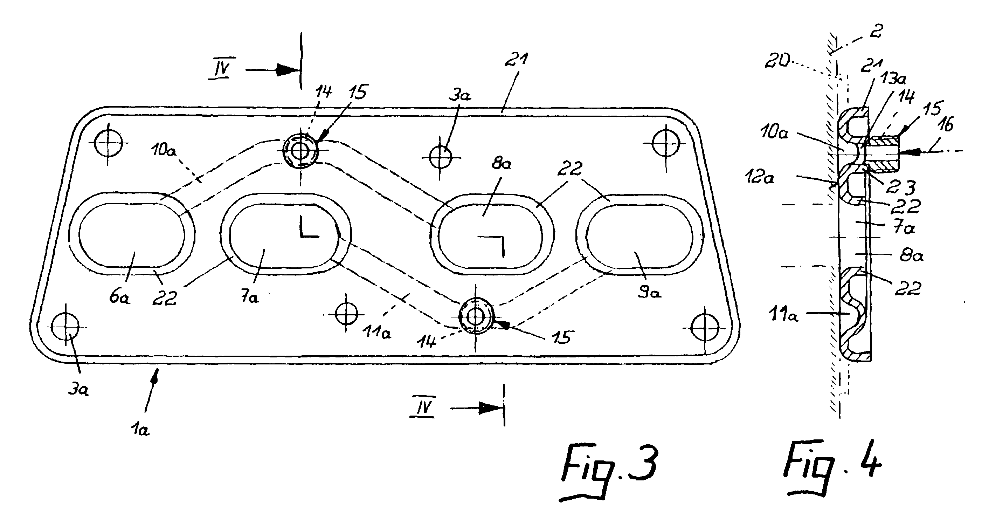

Bei der in den Figuren 3 und 4 veranschaulichten Ausführungsform einer Flanschplatte 1a ist das Ausgangsmaterial eine vergleichsweise dünnwandige Stahlblechplatine 20. Diese vorgestanzte Stahlblechplatine 20 wird in einem entsprechenden Werkzeug spanlos umgeformt, wobei durch rechtwinkliges Umstellen des Materials aus der Ebene der Stahlblechplatine 20 ein umfangsseitiger Rand 21 der Flanschplatte 1a sowie die die Abgaslöcher 6a-9a und die die Querkanäle 13a begrenzenden Wände 22, 23 gebildet werden. Gleichzeitig werden die gasleitenden Mulden 10a, 11a zwischen den Abgaslöchern 6a-9a und den Querkanälen 13a in die motorblockseitige Seitenfläche 12a unter gleichzeitiger exakt ebener Gestaltung dieser Seitenfläche 12a eingeformt.

Vor dem Umformen der Stahlblechplatine 20 zur Flanschplatte 1a sind die Querbohrungen 3a, die Querkanäle 13a und die Abgaslöcher 6a-9a vorgestanzt worden.

Nach dem Umformen der Stahlblechplatine 20 zu der in den Figuren 3 und 4 veranschaulichten Flanschplatte 1a werden dann an die dem Motorblock 2 abgewandten Mündungen der Querkanäle 13a mit Außengewinde 14 versehene Nippel 15 als Anschlüsse für Sekundärluftleitungen 16 durch Widerstandsschweißung dicht angesetzt.

## Patentansprüche

1. Vorrichtung zur Ankopplung von Abgasrohren an einen Motorblock (2), welche eine Flanschplatte (1) mit mehreren über ihre gesamte Dicke durchgehenden Abgaslöchern (6-9) und mindestens eine zwischen den Abgaslöchern (6-9) zugehöriger Abgasrohre angeordnete Gasverbindung (10, 11) aufweist, die mit einem auf der dem Motorblock (2) abgewandten Seite der Flanschplatte (1) liegenden Anschluss (15) für eine Sekundärluftleitung (16) gekuppelt ist, bei welcher die Gasverbindung als muldenartige Nute (10, 11) in der motorblockseitigen Seitenfläche (12) der einstückigen Flanschplatte (1) ausgebildet und über einen die Flanschplatte (1) durchsetzenden Querkanal (13) mit dem Anschluss (15) für die Sekundärluftleitung (16) verbunden ist, wobei die Gasmulde (10, 11) und die ebene motorblockseitige Seitenfläche (12) durch eine spanlose Verpressung des Ausgangsmaterials der Flanschplatte (1) hergestellt sind.

2. Vorrichtung zur Ankopplung von Abgasrohren an einen Motorblock (2), welche eine Flanschplatte (1a) mit mehreren über ihre gesamte Dicke durchgehenden Abgaslöchern (6a-9a) und mindestens eine zwischen den Abgaslöchern (6a-9a) zugehöriger Abgasrohre angeordnete Gasverbindung (10a, 11a) aufweist, die mit einem auf der dem Motorblock (2) abgewandten Seite der Flanschplatte (1a) liegenden Anschluss (15) für eine Sekundärluftleitung (16) gekuppelt ist, bei welcher die Gasverbindung als muldenartige Nute (10a, 11a) in der motorblockseitigen Seitenfläche (12a) der einstückigen Flanschplatte (1a) ausgebildet und über einen die Flanschplatte (1a) durchsetzenden Querkanal (13a) mit dem Anschluss (15) für die Sekundärluftleitung (16) verbunden ist, wobei die Gasmulde (10a, 11a) und die ebene motorblockseitige Seitenfläche (12a) durch spanlose Umformung einer dünnwandigen Stahlblechplatine (20) hergestellt sind.

3. Vorrichtung nach Anspruch 2, bei welcher durch rechtwinkliges Umstellen des Materials aus der Ebene der Stahlblechplatine (20) ein umfangsseitiger Rand (21) der Flanschplatte (1a) sowie die die Abgaslöcher (6a-9a) und den Querkanal (13a) begrenzenden Wände (22, 23) gebildet sind.

4. Vorrichtung nach einem der Ansprüche 1 bis 3, bei welcher der Anschluss für die Sekundärluftleitung (16) durch einen an die dem Motorblock (2) abgewandte Mündung des Querkanals (13, 13a) dicht angesetzten, mit einem Außengewinde (14) versehenen Nippel (15) gebildet ist.

## Claims

1. A device for coupling exhaust-gas pipes to an engine block (2) and comprising a flanged plate (1) with a number of exhaust-gas holes (6 - 9) extending through its entire thickness and at least one gas connection (10, 11) disposed between the holes (6 - 9) of associated exhaust-gas pipes and coupled to a connection (15) for a secondary air pipe (16) disposed on the side of the flanged plate (1) remote from the engine block (2), wherein the gas connection is in the form of a trough-like groove (10, 11) in the side surface (12) of the one-piece flanged plate (1) adjacent the engine block and is connected to the connection (15) for the secondary air pipe (16) via a transverse duct (13) extending through the flanged plate (1), wherein the gas trough (10, 11) and the flat side surface (12) adjacent the engine block are produced without cutting, by pressing the starting material for the flanged plate (1).

2. A device for coupling exhaust-gas pipes to an engine block (2) and comprising a flanged plate (1a) with a number of exhaust-gas holes (6a - 9a) extending through its entire thickness and at least one gas connection (10a, 11a) disposed between the holes (6a - 9a) of associated exhaust-gas pipes and coupled to a connection (15) for a secondary air pipe (16) disposed on the side of the flanged plate (1a) remote from the engine block (2), wherein the gas connection is in the form of a trough-like groove (10a, 11a) in the side surface (12a) of the one-piece flanged plate (1a) and is connected to the connection (15) for the secondary air pipe (16) via a transverse duct (13a) extending through the flanged plate (1a), wherein the gas trough (10a, 11a) and the flat side surface (12a) adjacent the engine block are produced without cutting, by shaping a thin-walled sheet-steel plate (20).

3. A device according to claim 2, wherein the material is bent at right angles out of the plane of the sheet-steel plate (20) so as to form a peripheral edge (21) on the flanged plate (1a) and to form the walls (22, 23) bounding the exhaust-gas holes (6a - 9a) and the transverse duct (13a).

4. A device according to any of claims 1 to 3, wherein the connection for the secondary air pipe (16) is formed by a nipple (15) having an outer thread (14) and tightly attached to the mouth of the transverse duct (13, 13a) remote from the engine block (2).

## Revendications

1. Dispositif pour le raccordement de tuyaux d'échappement de gaz sur un bloc moteur (2), qui comporte une plaque de bridage (1,1a) avec plusieurs trous de gaz d'échappement (6-9) traversant sur toute son épaisseur et au moins un raccord de gaz (10,11) qui est accouplé avec un raccordement (15) situé sur le côté de la plaque de bridage (1) détourné du bloc moteur (2) pour une conduite d'air secondaire (16), dans lequel le raccord de gaz est conçu sous forme d'une gorge évasée (10, 11) dans la face latérale côté bloc moteur (12) de la plaque de bridage monobloc (1) et est raccordé par l'intermédiaire d'un canal transversal (13) traversant la plage de bridage (1) avec le raccord (15) pour la conduite d'air secondaire (16), la gorge évasée de gaz (10,11) et la face latérale plane côté bloc moteur (12) étant réalisées par une compression sans copeaux du matériau de départ de la plaque de bridage (1).

2. Dispositif pour le raccordement de tuyaux d'échappement de gaz sur un bloc moteur (2), qui comporte une plaque de bridage (1a) avec plusieurs trous de gaz d'échappement (6a-9a) traversant sur toute son épaisseur et au moins un raccord de gaz (10a, 11a) disposé entre les trous de gaz d'échappement (6a-9a) des tuyaux de gaz correspondants, et qui est accouplé avec un raccordement (15) situé sur le côté de la plaque de bridage (1a) détourné du bloc moteur (2) pour une conduite d'air secondaire (16), dans lequel le raccord de gaz est conçu sous forme d'une gorge évasée (10a, 11a) dans la face latérale côté bloc moteur (12, 12a) de la plaque de bridage monobloc (1a) et est raccordé par l'intermédiaire d'un canal transversal (13a) traversant la plaque de bridage (1a) avec le raccord (15) pour la conduite d'air secondaire (16), la gorge évasée de gaz (10a,11a) et la face latérale plate côté moteur (12a) étant réalisées par déformation sans copeaux d'une platine de tôle d'acier (20) à paroi mince.

3. Dispositif selon la revendication 2, **caractérisé en ce que** par déplacement à angle droit du matériau à partir du plan de la platine de tôle d'acier (20), on forme un bord périphérique (21) de la plaque de bridage (1a) ainsi que les parois (22,23) délimitant les trous de gaz d'échappement (6a-9a) et le canal transversal (13a).

4. Dispositif selon l'une des revendications 1 à 3, **caractérisé en ce que** le raccordement pour la conduite d'air secondaire (16) est formé par un raccord fileté (15) muni d'un filetage extérieur (14) étroitement fixé sur l'embouchure du canal transversal (13,13a) détourné du bloc moteur (2).
